(19) **Europäisches Patentamt**

**European Patent Office**

**Office européen des brevets**

(11) **EP 1 547 733 A2**

(12) **EUROPEAN PATENT APPLICATION**

(43) Date of publication:
29.06.2005  Bulletin 2005/26

(51) Int Cl.$^7$: **B25J 9/16**

(21) Application number: **04030680.5**

(22) Date of filing: **23.12.2004**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **26.12.2003 JP 2003435027**

(71) Applicant: **FANUC LTD**
**Minamitsuru-gun, Yamanashi 401-0597 (JP)**

(72) Inventors:
• **Watanabe, Atsushi**
 **Suginami-ku Tokyo 168-0072 (JP)**

• **Okuda, Mitsuhiro**
 **Fujiyoshida-shi Yamanashi 403-0017 (JP)**
• **Furuya, Yoshitake, FANUC Manshonharimomi**
 **Minamitsuru-gun Yamanashi 401-0511 (JP)**

(74) Representative: **Schmidt, Steffen J., Dipl.-Ing.**
 **Wuesthoff & Wuesthoff,**
 **Patent- und Rechtsanwälte,**
 **Schweigerstrasse 2**
 **81541 München (DE)**

(54) **Processing system**

(57) A processing system for stably processing a workpiece even if the shape of the workpiece changes every production lot of the workpiece, or by a change of the workpiece. The distance between the workpiece and an end of a nozzle of a laser machining head is measured by a distance sensor. A data correcting value $\Delta Z'mn$ is calculated using a measured distance $\Delta Zrn$ at each teaching point and a set gap value $\Delta Zs$ (step S6 - S15). By using $\Delta Z'mn$, the data of the teaching points are corrected to new data of the teaching points of the program (step S16 - S19). The distance between the workpiece and the end of the nozzle of the laser machining head does not become larger because the teaching points of the processing program are corrected every time when the workpiece is processed. The interference between the workpiece and the head may be prevented and the processing may be stably implemented because the amount of correction becomes smaller when the position of the head is corrected during the processing.

Fig.2

## Description

BACKGROUND OF THE INVENTION

1. Field of the Invention

The present invention relates to a processing system for processing a workpiece by tracing a taught processing path of a processing program.

2. Description of the Related Art

A processing system for processing a workpiece by using a robot and tracing a taught processing path of a processing program is known in various industries such as the auto industry. (For example, see Japanese Patent Application Unexamined Publication No. 10-1.09250.) In laser machining, in particular, the gap between an end of a nozzle of a laser machining head and a workpiece must be highly accurate. On the other hand, in press working, a shape of a workpiece may change every production lot of the workpiece due to a change of a shape of a press mold and/or a change of a press working condition. In such a case, the suitable distance of the gap between a nozzle of a laser.machining head and a workpiece required for laser machining cannot be obtained and, therefore, laser machining cannot be suitably implemented. Therefore, in a conventional laser machining system using a robot, a distance sensor is positioned near a laser machining head for measuring the distance of the gap between the end of a nozzle of the laser machining head and a workpiece. The distance of the gap is compared to a taught reference value of a processing program and the difference between them, or a position correcting value, is used for feedback control in which the laser machining may be moved in line with a surface of the workpiece.

In conventional feedback control using the distance of the gap, the distance of the gap between the nozzle of the laser machining head and the workpiece on the processing path of the processing program is measured, is compared to a predetermined taught reference value and, then, the laser machining head is driven to correct the difference between them in order to maintain the gap. When the difference is large, acceleration and deceleration of the laser machining head may be delayed and may not fully perform the motion for correcting the difference and, therefore, the laser machining head may interfere with the workpiece.

In particular, when the workpiece to be processed is a pressed product which is processed in, for example, an automobile assembly line, the shape of the workpiece may change every lot of the pressed workpiece, as described above. Therefore, even if the distance of the gap between the nozzle of the laser machining head and the workpiece by the distance sensor and machining is implemented by the feedback control for suitably correcting the gap, when the distance to be corrected is relatively large, the motion of the laser machining head may be insufficient for correcting the distance and the laser machining head may interfere with the workpiece.

SUMMARY OF THE INVENTION

Accordingly, an object of the present invention is to provide a processing system for stably processing the workpiece even if the shape of the workpiece changes every production lot of the workpiece, or by a change in the workpiece.

According to one aspect of the present invention, there is provided a processing system comprising: a robot configured to movably hold one of a workpiece to be processed and a processing tool processing the workpiece relative to the other; a detecting device for sensing the distance between the workpiece and the processing tool; a robot control device having a storing part for storing a processing program including teaching points forming a processing path of the workpiece, and a processing part for feedback controlling the distance between the workpiece and the processing tool sensed by the detecting device during processing by executing the processing program stored in the storing part, the processing part controlling the robot such that the processing tool is moved relative to the workpiece while the distance between the workpiece and the processing tool is kept at a predetermined length, calculating the relative position of the processing path to the workpiece by controlling the robot, and correcting the processing path based on the relative position.

The processing path may be corrected by correcting the teaching points or other points arranged between the teaching points. In this case, the teaching points or the other points may be further corrected by using a predetermined correcting data.

The processing part may judge the workpiece as a defect if the difference between a position on the processing path based on the teaching points of the processing program and a corresponding position defined by controlling the robot is exceeds a predetermined tolerance.

The processing part may correct the processing path during or after processing.

The processing part may calculate a shape of a surface of the workpiece based on the distance between the surface of the workpiece and the end of the processing tool and the position data defined by controlling the robot, the processing part correcting the processing path such that the measured distance between the surface of the workpiece and the end of the processing tool is corrected to the predetermined length when a dimensional tolerance of the shape of the surface of the workpiece is within a predetermined range, or judging the workpiece as a defect when the dimensional tolerance is out of the predetermined range.

The processing system may further comprise a display unit for indicating the shape of the workpiece defined by the corrected processing path.

The storing part may store the position data defined by controlling the robot. The robot control device may comprise a first arithmetic part for preparing an approximate equation of a path of the processing tool based on the stored position data corresponding to the teaching points of the processing program, and for changing the teaching points to points on the path defined by the approximate equation.

The robot control device may further comprise a second arithmetic part for calculating a range or a trend of change of the shape of the workplace based on the position data defined by controlling the robot.

The processing system may further comprise a display unit for indicating a point on the processing path defined by controlling the robot, corresponding to each of the teaching points of the processing program.

According to another aspect of the present invention, there is provided a robot control device for controlling a robot of a processing system comprising: the robot configured to movably hold one of a workpiece to be processed and a processing tool processing the workpiece relative to the other; a detecting device for sensing the distance between the workpiece and the processing tool; the robot control device comprising: a storing part for storing a processing program including teaching points forming a processing path of the workpiece; and a processing part for feedback controlling the distance between the workpiece and the processing tool sensed by the detecting device during processing by executing the processing program stored in the storing part, the processing part controlling the robot such that the processing tool is moved relative to the workpiece while the distance between the workpiece and the processing tool is kept at a predetermined length, calculating the relative position of the processing path to the workpiece by controlling the robot, and correcting the processing path based on the relative position.

According to still another aspect of the present invention, there is provided a processing method using a robot configured to movably hold one of a workpiece to be processed and a processing tool processing the workpiece relative to the other, the method comprising: sensing the distance between the workpiece and the processing tool; storing a processing program including teaching points forming a processing path of the workpiece; feedback controlling the distance between the workpiece and the processing tool during processing by executing the processing program; controlling the robot such that the processing tool is moved relative to the workpiece while the distance between the workpiece and the processing tool is kept at a predetermined length; calculating the relative position of the processing path to the workpiece by controlling the robot; and correcting the processing path based on the relative position.

BRIEF DESCRIPTION OF THE DRAWINGS

The above and other objects, features and advantages of the present invention will be made more apparent by the following description of the preferred embodiments thereof, with reference to the accompanying drawings, wherein:

Fig. 1 is a block diagram showing a basic configuration of a processing system according to the present invention;
Fig. 2 is a schematic diagram of one embodiment of the invention;
Figs. 3a and 3b are flowcharts showing a process for correcting the teaching position data of the embodiment;
Fig. 4 is a diagram explaining the correction of the teaching position;
Figs. 5a and 5b are diagrams of the measured shape of the workpiece and a change of the teaching position of the embodiment, respectively; and
Fig. 6 is an diagram showing an example indicating position data.

DETAILED DESCRIPTION

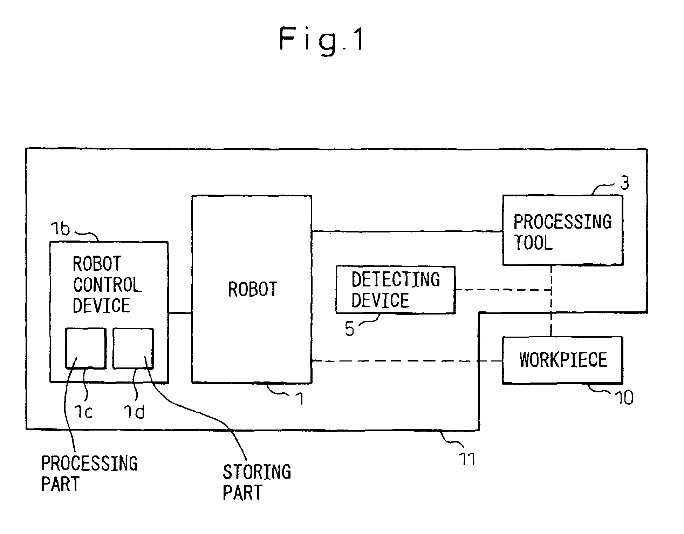

As shown in Fig. 1, the processing system 11 according to the present invention has a robot 1 configured such that a processing tool 3 for processing a workpiece 10 is movably held by the robot 1 relative to the workpiece 10. Alternatively, the robot 1 may be configured to movably hold the workpiece 10 relative to the fixed processing tool 3. The processing system 11 also has a detecting device 5 for sensing the distance between the workpiece 10 and the processing tool 3, and a robot control device 1b for controlling the robot 1. The robot control device 1b has a storing part 1d for storing a processing program including teaching points forming a processing path of the workpiece 10, and a processing part 1c for feedback controlling the distance between the workpiece 10 and the processing tool 3, sensed by the detecting device 5 during processing, by executing the processing program stored in the storing part 1d. The processing part 1c controls the robot 1 such that the processing tool 3 is moved relative to the workpiece 10 while the distance between the workpiece 10 and the processing tool 3 is kept at a predetermined length. Further, the processing part 1c calculates the relative position of the processing path to the workpiece 10 by controlling the robot 1, and correcting the processing path based on the relative position.

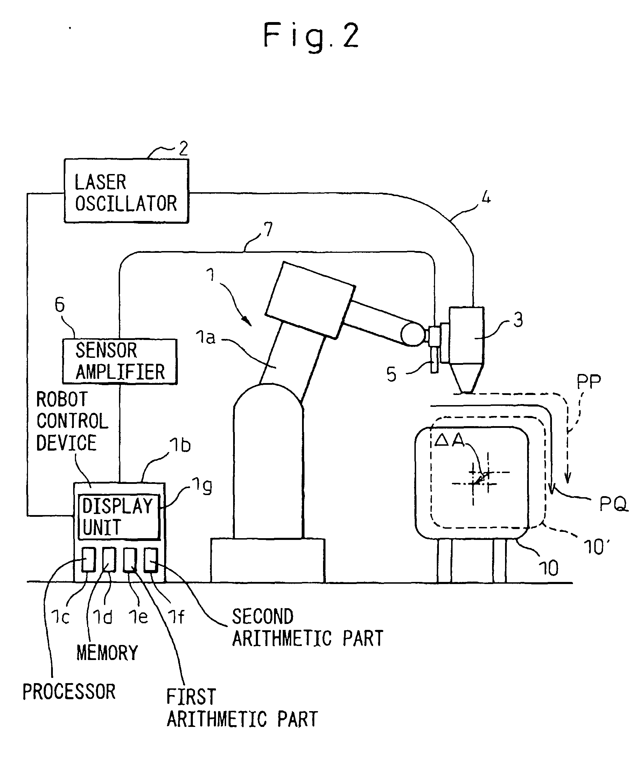

Fig. 2 is a schematic diagram of one embodiment of the invention. A processing system 11 of the embodiment has a robot 1, a laser oscillator 2 and a laser machining head 3. The laser machining head 3 or the processing tool is mounted to an end of a manipulator 1a of the robot 1. The laser machining head 3 and the laser oscillator 2 are connected to each other by an optical fiber 4. A distance sensor 5 is also mounted to the end of the manipulator la. The output of the distance sensor 5 is fed to a distance sensor amplifier 6 via a cable 7 and, the output of the amplifier 6 is fed to the robot control device 1b. The robot control device 1b has a processor 1c, a memory 1d such as a ROM and a RAM, an input and an output circuits, a servo-control circuit for controlling the rotational position and the speed of a servomotor driving each joint of the manipulator 1a, and a servo amplifier for driving the servomotor.

A numeral 10 in Fig. 2 denotes an object to be processed or a workpiece. The memory or the storing part 1d of the robot control device 1b stores a processing program including a processing path formed by predetermined teaching points. The processor or the processing part 1c of the robot control device 1b executes the processing program, whereby a laser beam produced by the laser oscillator 2 is sent to the laser machining head 3 via the optical fiber 4 so as to irradiate the workpiece 10 by the laser beam. Further, The processor 1c controls driving of the manipulator 1a based on the processing program, whereby the laser machining head 3 mounted to the end of the manipulator 1a is moved along the processing path commanded by the program so as to implement laser machining. At this point, the robot control device 1b measures the distance between the workpiece 10 and an end of an nozzle of the laser machining head 3 by using the distance sensor 5. Then, the robot control 1b executes feedback control for controlling driving of the manipulator 1a, in which the processing path teaching the height position of the laser machining head 3 is corrected such that the measured distance is correspond to a reference gap value.

The above constitution including the manipulator 1a, the robot control device 1b, the laser oscillator 2, the laser machining head 3, the distance sensor 5 and the distance sensor amplifier 6 may be the same as a conventional processing system using a robot for laser machining. Also, the drive controlling of the manipulator 1a in which the height position of the laser machining head 3 is corrected such that the distance measured by the sensor 5 between the workpiece 10 and the nozzle of the laser machining head 3 is correspond to the reference gap value may be the same as that of prior art.

The invention is characterized in that positions of the teaching points taught in the processing program are corrected every time when one workpiece is processed. The processing program is prepared by teaching points on the processing path relative to the workpiece 10 and is stored in the memory of the robot control device 1b. In the present invention, the preparation of the processing program may use one of two methods: in a first method, the robot 1 is activated and the laser processing head 3 is moved such that the position of the head 3 corresponds to the processing point, whereby the teaching points and the processing path are taught so as to prepare the processing program; and in a second method, the processing program is prepared in off-line mode by an auto programming device.

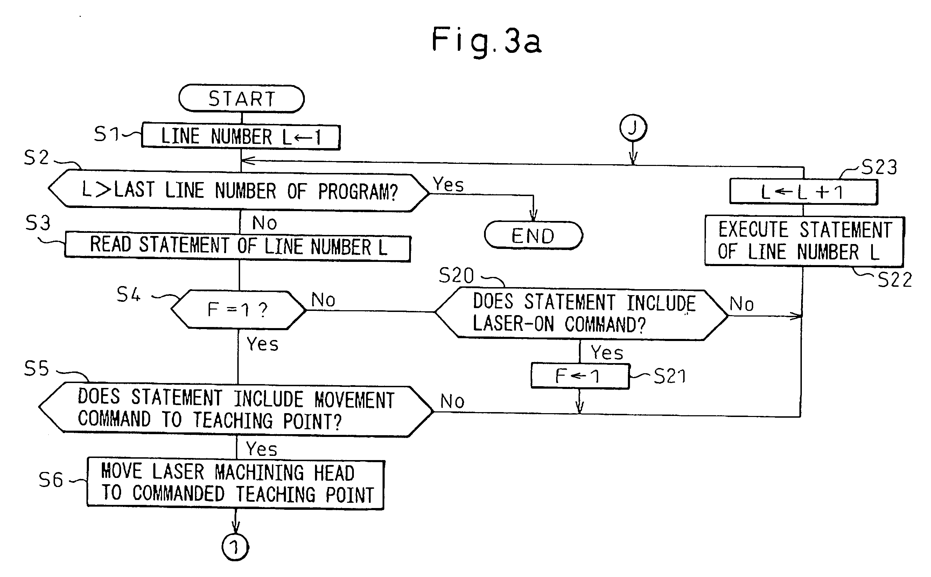

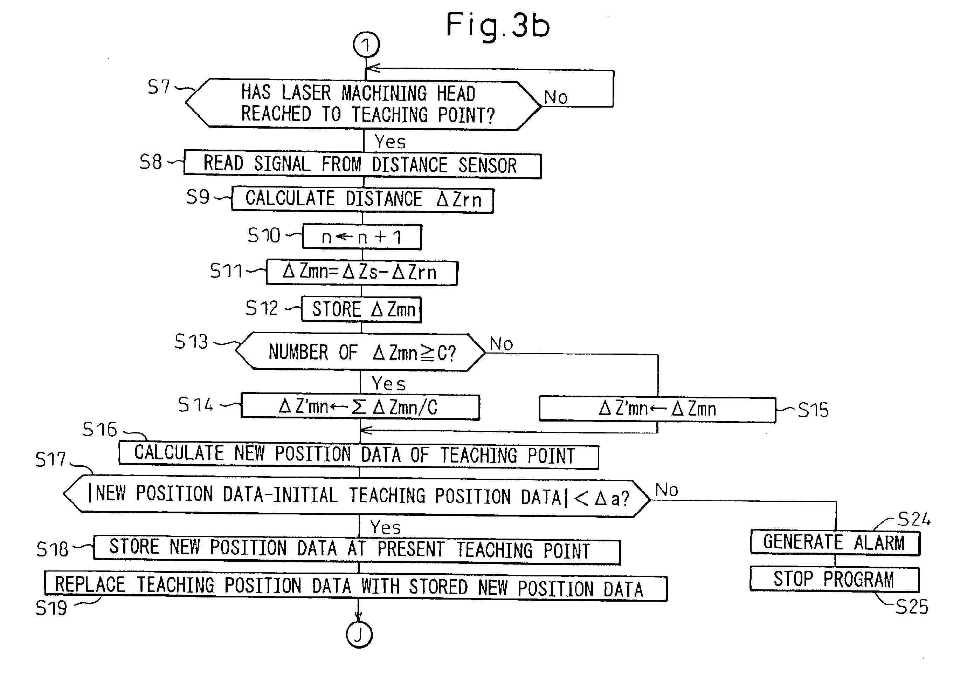

When the processing program is prepared by one of the above methods and is stored in the memory 1d of the robot control device 1b, the processor 1c of the robot control device 1b starts a process shown in Figs. 3a and 3b by inputting an execution command for processing including a production lot of the workpiece.

First, a register designating a line number L of the processing program is set to "1" (step S1). The line number L is compared to a last line number of the program (step S2), then, a statement of line number L of the program is read if L does not exceed the last number (step S3). Next, a flag F (initially set to "0") is checked if the flag is set to "1" (step S4). If the flag is not "1", the statement read in step S3 is checked whether the statement includes a laser-ON command (step S20). Then, if the statement does not include the laser-ON command, the process is directly progressed to step S22, otherwise, the process is progressed to step S21 where the flag set to "1" and is progressed to step S22.

In step S22, the command of the statement of line number L is executed and the register designating the line number L is incremented by one. The process is then returned to step 32. Therefore, the processes of step S2 -S4, S20, S22 and S23 are repeated until the laser-ON command is read. After the laser-ON command is read, the flag is set to "1" (step S21) and the laser-ON command is fed to the laser oscillator 2 to activate the laser oscillator 2 (step S22).

Thereafter, lines of the program are read sequentially. Because the flag F = "1", the process progresses from step S4 to step S5. In step S5, the statement of the read line is checked whether the statement includes a movement command to the teaching point or not. If the statement does not include the movement command, the process progresses to step S22, otherwise, the laser machining head 3 is moved to the commanded teaching point to process the workpiece (step S6). At this point, the processor 1c reads a signal from the distance sensor 5 so as to calculate the distance the end of the nozzle of the laser machining head 3 and the workpiece 10 based on the signal and controls driving of the robot 1 by feedback controlling such that the distance is correspond to a set gap value $\Delta Zs$.

Then, it is checked whether the laser machining head 3 has reached the commanded teaching point or not (step 37). If the head 3 has reached the point, the processor 1c reads the signal from the distance sensor 5 (step S8) and calculates the distance of the gap $\Delta Zrn$ between the end of the nozzle of the laser machining head 3 and the workpiece 10 at the teaching point, based on the signal (step S9). Next, an index n indicating the teaching point after the laser-ON command is incremented by one (step S10). The index n is set "0" by initial setting when the execution command for processing is input.

Next, a position correcting value $\Delta Zmn$ is calculated by subtracting the value $\Delta Zrn$ calculated in step

S9 from the set gap value $\Delta Zs$ (step S11). That is, a position correcting value $\Delta Zmn$ is defined as follows:

$$\Delta Zmn = \Delta Zs - \Delta Zrn \qquad (1)$$

The position correcting values $\Delta Zmn$ calculated in this manner are stored in the memory 1d until the number of values $\Delta Zmn$ reaches to C (step S12). In other words, the $\Delta Zmn$ data the number of which is C are stored in a FIFO in the memory 1d.

Then, in step S13, the number of the values $\Delta Zmn$ stored in the memory 1d is checked whether the number (or frequency of execution of the processing program) is equal to or more than C. If the number is less than C, the position correcting value $\Delta Zmn$ calculated in step S11 is set as a data correcting value $\Delta Z'mn$ of the teaching point (step S15). Otherwise, an average value of the position correcting value $\Delta Zmn$ is set as the data correcting value $\Delta Z'mn$ (step S14). A new position data is calculated by this data correcting value $\Delta'Zmn$ and the teaching position data (step S16).

For example, in p-th execution of the processing program, the calculated position correcting value $\Delta Zmn$ associated with an arbitrary teaching point n is indicated as a difference value between the arranged workpiece and the processing tool. The position correcting values $\Delta Zmn$ at the teaching point n the number of which is C are stored in the memory 1d, and the data correcting value $\Delta Z'mn$ is an average value of the C values $\Delta Zmn$ at the teaching point n. In other words, the $\Delta Z'mn$ is calculated by dividing by C the sum of C values $\Delta Zmn$. If the number of values $\Delta Zmn$ stored in the memory 1d is less than C, the value $\Delta Z'mn$ is equal to the p-th position correcting $\Delta Zmn$ calculated according to the equation (1). The new position data in (p+1)-th execution of the processing program will be (Xn', Yn', 2n') which is obtained by adding the data correcting value $\Delta Z'mn$ to the teaching position data (Xn, Yn, Zn).

Instead of step S11 - S16 in which the new position data (Xn', Yn', Zn') is calculated, an approximate equation may be prepared based on stored teaching point data by using a first arithmetic part 1e or the processor 1c of the robot control device 1b and some points on the approximate equation may be new teaching positions. In preparation of the approximate equation, methods of polynomial approximation, linear approximation, log approximation, power approximation or exponential approximation may be used.

Next, the differences between the new position data and the corresponding initial teaching position data are checked whether the differences is more than a max correcting allowance $\Delta a$ (step S17). If one of the differences is more than $\Delta a$, an alarm is generated (step S24) and the program is stopped (step S25). The reason for this is that if the difference between the new teaching position data and the initial teaching data is too large, the shape or the condition of the workpiece would be abnormal.

When the direction of an axis of the laser machining head 3 coincides with z-axis of a rectangular coordinate system, the distance between the workpiece 10 and the nozzle of the laser machining head 3 may be calculated by simply adding the data correcting value $\Delta Z'mn$ to the z-coordinate of the head 3. When the laser machining head 3 is inclined, on the other hand, the distance $\Delta Zrn$ should be measured along the inclined axis of the head 3. Similarly, the data correcting value $\Delta Z'mn$ should be determined along the inclined axis. As the direction of the inclined axis is defined by taught orientation data of the laser machining head 3, an inclination angle of the axis is calculated by the orientation data. The new teaching position data are defined by calculating the correcting value of each of axes using the inclination angle.

The calculated new position data at the present teaching points are stored in the memory 1d (step S18), and then, each of the teaching position data is replaced with corresponding each of the stored new position data (step S19). The process is then returned to step S2.

During the workpiece produced in a certain lot is machined, the process including the above described step S2 and steps after S2 may be repeatedly executed for correcting the teaching point of the processing program, so as to obtain the processing program including the new teaching position data. When the last line of the program is executed, the machining process will end.

As shown in Fig. 2, for example, it is assumed that the processing program is taught such that the workpiece is shaped as indicated by a dashed line 10'. Also, the processing path of the laser machining head 3 is assumed to be a dashed line PP. If the shape of one workpiece produced in a certain lot has a distortion $\Delta A$ as indicated by a solid line 10, the process shown in Figs. 3a and 3b is executed for correcting the teaching points of the processing program according to the actual shape of the workpiece. The processing path of the program is corrected to a solid line PQ and the distance between the workpiece 10 and the nozzle of the laser machining head 3 is kept to the set gap value $\Delta Zs$.

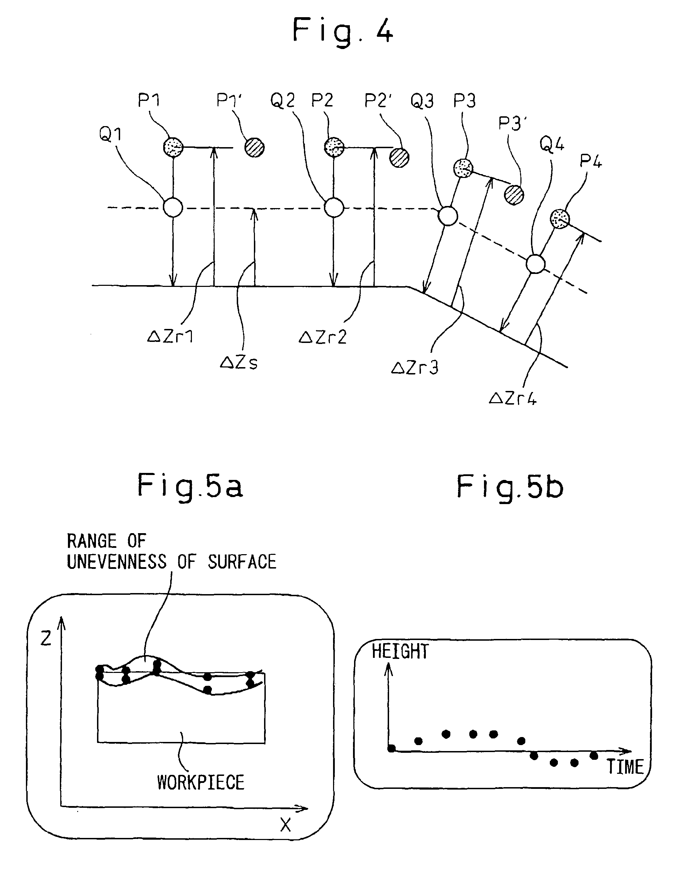

Fig. 4 is drawing for explaining the correction of the teaching data. The teaching points of the processing program is assumed to be points P1, P2, P3, P4, .. , respectively, and the distances between the laser machining head and the workpiece measured at the teaching points assumed to be $\Delta Zr1$, $\Delta Zr2$, $\Delta Zr3$, $\Delta Zr4$, .. The new teaching position data Q1, Q2, Q3, Q4, .. , are defined by the data correcting value $\Delta Z'mn$ which is the average of the position correcting values $\Delta Zmn$ the number of which is C. The values $\Delta Zmn$ (n=1, 2, 3, 4, ..) are calculated by subtracting the distance of the gap $\Delta Zrn$ from the set value $\Delta Zs$ and are stored as history data of the teaching points. At this point, the measurement errors of the distance sensor or the height sensor at teaching points are averaged by using the average of

the values $\Delta Zmn$ in past C times. In addition, if C=1, then the last calculated position correcting value $\Delta Zmn$ will be equal to the data correcting value $\Delta Z'mn$.

The processing path PQ including the new teaching points Q1, Q2, Q3, Q4, .. where the distance between the workpiece 10 and the end of the nozzle of the laser machining head 3 is kept to the set gap value $\Delta Zs$, may be obtained by correcting the position of the head 3 along the direction of the axis of the head or the irradiating direction of the laser beam.

As described, the processing program including newly corrected teaching points is prepared every time when the workpiece is processed. When one of the differences between the new position data defined in step S17 and the corresponding initial teaching position data is more than the max correcting allowance $\Delta a$, an alarm is generated (step S24) and the program is stopped forcibly. If one of the differences between the new teaching position data and the initial teaching data is more than $\Delta a$, the shape of the workpiece would be considered to be changed too much from the its initial shape.

As described above, the robot control device 1b calculates the distance of the gap between the workpiece 10 and the end of the nozzle of the laser machining head 3 based on the measured distance by the distance sensor 5 and executes the feedback control such that the distance of the gap corresponds to the set gap value $\Delta Zs$. This operation of the robot control device 1b may be same as a conventional operation. In the invention, however, the teaching points are corrected every time when the workpiece is processed, further, the processing path of the processing program including new teaching points is prepared. As a control of processing for a following workpiece may be executed by the corrected program, the amount of correcting according to the control may be small, whereby the interference between the laser machining head 3 and the workpiece 10 which may occur due to the delay of acceleration and deceleration of the head 3 for correcting, is prevented.

In the above embodiment, the teaching points are corrected during the processing. However, the position data for the new teaching points may be calculated after the processing (or between one processing and the following processing) by sequentially storing the position correcting value $\Delta Zmn$. In other words, the position correcting value $\Delta Zmn$ may be sequentially stored in the memory in step S12, then step S13 and following steps for correcting the position data of the teaching points may be executed after the processing.

Further, in the above embodiment, the processing system is described in which the workpiece is positioned at a fixed place and the laser machining head or the processing tool is attached to the end of the manipulator or a robot arm. However, the processing tool may be fixed and the workpiece may be held by a clamp attached to the end of the robot arm, so as to control the movement of the workpiece along the processing path taught by the processing program for processing the workpiece.

The shape of the workpiece 10 may be displayed by a display unit 1g of the robot control device 1b, which is defined based on the new position data of the teaching points calculated in step S19 and the set gap value $\Delta Zs$, or based on the position data of the teaching points before correcting and the distance $\Delta Zn$ calculated in step S9 between the workpiece and the laser machining head. By displaying the shape of the workpiece, the change of the shape may be monitored to check the condition of the workpiece.

The whole three-dimensional shape of the workpiece 10 may be monitored by regularly executing the copying control with no processing against the entire workpiece.

Unevenness of the shape of the workpiece 10 may be calculated by a second arithmetic part 1f or the processor 1c of the robot control device 1b, using a maximum and a minimum values of the data of the teaching points stored for a predetermined period of time regarding the shape of the workpiece. The unevenness and/or a change of the shape may be displayed by the display unit 1g, as shown in Figs. 5a and 5b. Fig. 5a illustrates an example of the unevenness of the surface of the workpiece, Fig. 5b illustrates an example of the secular change of the height position at one arbitrary teaching point.

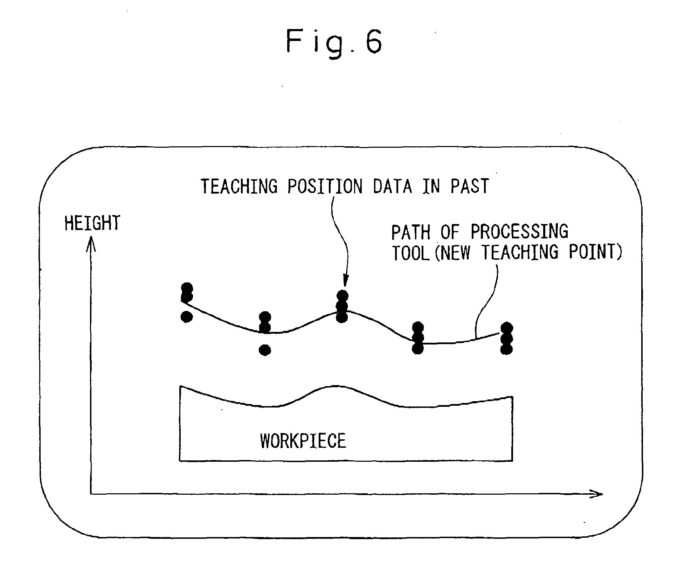

The display unit 1g may also display the measured position data for a predetermined period of time or the new teaching position data by executing steps S8 - S19, as shown in Fig. 6.

If a defect in the processing is detected in an inspection process of the workpiece processed using the copying control, the processing system of the invention may implement recalibration of the distance between the processing tool and the surface of the workpiece by recognizing a signal for indicating the defect. The processing system may correct the teaching points by executing the control based on recalibrated data.

Regarding Fig. 4, instead of correcting the teaching points P1- P4, other points (for example, P1, P2, and P3) may be arranged between the teaching points and corrected by using data measured by the distance sensor 5. Further, The teaching points or the other points thus corrected may be properly compensated using a given compensation data.

Although the invention is explained using the example of the processing system for laser machining is described in the above, however, the invention may also be applied to a system for arc welding using a robot.

As described, according to the invention, even if the shape of the workpiece changes every production lot of the workpiece, or by a change of the material forming the workpiece, interference between the processing tool and the workpiece due to the delay of acceleration and deceleration of the processing tool may be prevented by correcting the processing program based on the actual shape of the workpiece when the feedback control of the position of the processing tool is implemented using the distance sensor.

While the invention has been described with reference to specific embodiments chosen for the purpose of illustration, it should be apparent that numerous modifications could be made thereto, by one skilled in the art, without departing from the basic concept and scope of the invention.

**Claims**

1. A processing system comprising:

a robot (1) configured to movably hold one of a workpiece (10) to be processed and a processing tool (3) processing the workpiece (10) relative to the other;
a detecting device (5) for sensing the distance between the workpiece (10) and the processing tool (3);
a robot control device (1b) having

a storing part (1d) for storing a processing program including teaching points forming a processing path of the workpiece (10), and

a processing part (1c) for feedback controlling the distance between the workpiece (10) and the processing tool (3) sensed by the detecting device (5) during processing by executing the processing program stored in the storing part (1d), the processing part (1c) controlling the robot (1) such that the processing tool (3) is moved relative to the workpiece (10) while the distance between the workpiece (10) and the processing tool (3) is kept at a predetermined length, calculating the relative position of the processing path to the workpiece (10) by controlling the robot (1), and correcting the processing path based on the relative position.

2. The processing system as set forth in claim 1, wherein the processing path is corrected by correcting the teaching points.

3. The processing system as set forth in claim 2, wherein the teaching points are further corrected by using a predetermined correcting data.

4. The processing system as set forth in claim 1, wherein the processing path is corrected by correcting other points arranged between the teaching points.

5. The processing system as set forth in claim 1, wherein the other points are further corrected by using a predetermined correcting data.

6. The processing system as set forth in claim 1, wherein the processing part (1c) judges the workpiece (10) as a defect if the difference between a position on the processing path based on the teaching points of the processing program and a corresponding position defined by controlling the robot (1) is exceeds a predetermined tolerance.

7. The processing system as set forth in claim 1, wherein the processing part (1c) corrects the processing path during processing.

8. The processing system as set forth in claim 1, wherein the processing part (1c) corrects the processing path after processing.

9. The processing system as set forth in claim 1, wherein the processing part (1c) calculates a shape of a surface of the workpiece (10) based on the distance between the surface of the workpiece (10) and the end of the processing tool (3) and the position data defined by controlling the robot (1), the processing part (1c) correcting the processing path such that the measured distance between the surface of the workpiece (10) and the end of the processing tool (3) is corrected to the predetermined length when a dimensional tolerance of the shape of the surface of the workpiece (10) is within a predetermined range, or judging the workpiece (10) as a defect when the dimensional tolerance is out of the predetermined range.

10. The processing system as set forth in claim 9, further comprising a display unit (1g) for indicating the shape of the workpiece (10) defined by the corrected processing path.

11. The processing system as set forth in claim 1, wherein the storing part (1d) stores the position data defined by controlling the robot (1), the robot control device (1b) comprises a first arithmetic part (1e) for preparing an approximate equation of a path of the processing tool (3) based on the stored position data corresponding to the teaching points of the processing program, and for changing the teaching points to points on the path defined by the approximate equation.

12. The processing system as set forth in claim 1, wherein the robot control device (1b) further comprises a second arithmetic part (1f) for calculating a range or a trend of change of the shape of the workpiece (10) based on the position data defined by controlling the robot (1).

13. The processing system as set forth in claim 9, further comprising a display unit (1g) for indicating a point on the processing path defined by controlling the robot (1), corresponding to each of the teaching points of the processing program.

**14.** A robot control device (1b) for controlling a robot of a processing system comprising:

a robot (1) configured to movably hold one of a workpiece (10) to be processed and a processing tool (3) processing the workpiece (10) relative to the other;
a detecting device (5) for sensing the distance between the workpiece (10) and the processing tool (3);

the robot control device (1b) comprising:

a storing part (1d) for storing a processing program including teaching points forming a processing path of the workpiece (10); and
a processing part (1c) for feedback controlling the distance between the workpiece (10) and the processing tool (3) sensed by the detecting device (5) during processing by executing the processing program stored in the storing part (1d), the processing part (1c) controlling the robot (1) such that the processing tool (3) is moved relative to the workpiece (10) while the distance between the workpiece (10) and the processing tool (3) is kept at a predetermined length, calculating the relative position of the processing path to the workpiece (10) by controlling the robot (1), and

correcting the processing path based on the relative position.

**15.** A processing method using a robot (1) configured to movably hold one of a workpiece (10) to be processed and a processing tool (3) processing the workpiece (10) relative to the other, the method comprising:

sensing the distance between the workpiece (10) and the processing tool (3);
storing a processing program including teaching points forming a processing path of the workpiece (10);
feedback controlling the distance between the workpiece (10) and the processing tool (3) during processing by executing the processing program;
controlling the robot (1) such that the processing tool (3) is moved relative to the workpiece (10) while the distance between the workpiece (10) and the processing tool (3) is kept at a predetermined length;
calculating the relative position of the processing path to the workpiece (10) by controlling the robot (1); and
correcting the processing path based on the relative position.

# Fig.1

ROBOT CONTROL DEVICE `1b`

PROCESSING PART `1c`

STORING PART `1d`

ROBOT `1`

DETECTING DEVICE `5`

PROCESSING TOOL `3`

WORKPIECE `10`

`11`

# Fig.2

LASER OSCILLATOR ~2

4

7

1

6

1a

3

SENSOR AMPLIFIER

5

ROBOT CONTROL DEVICE

1b

DISPLAY UNIT

1g

PP

△ A

PQ

10'

10

1c 1d 1e 1f

SECOND ARITHMETIC PART

MEMORY

PROCESSOR

FIRST ARITHMETIC PART

# Fig.3a

# Fig.3b

① 

S7 — ⟨HAS LASER MACHINING HEAD REACHED TO TEACHING POINT?⟩ —No

Yes

S8 — READ SIGNAL FROM DISTANCE SENSOR

S9 — CALCULATE DISTANCE $\Delta Zrn$

S10 — $n \leftarrow n+1$

S11 — $\Delta Zmn = \Delta Zs - \Delta Zrn$

S12 — STORE $\Delta Zmn$

S13 — ⟨NUMBER OF $\Delta Zmn \geqq C$?⟩ —No

Yes

S14 — $\Delta Z'mn \leftarrow \Sigma \Delta Zmn / C$

S15 — $\Delta Z'mn \leftarrow \Delta Zmn$

S16 — CALCULATE NEW POSITION DATA OF TEACHING POINT

S17 — ⟨|NEW POSITION DATA-INITIAL TEACHING POSITION DATA| $< \Delta a$?⟩ —No

Yes

S18 — STORE NEW POSITION DATA AT PRESENT TEACHING POINT

S19 — REPLACE TEACHING POSITION DATA WITH STORED NEW POSITION DATA

S24 — GENERATE ALARM

S25 — STOP PROGRAM

Ⓙ

EP 1 547 733 A2

# Fig. 4

P1  P1'  Q2  P2  P2'  Q3  P3  P3'  Q4  P4

Q1

$\triangle Zr1$   $\triangle Zr2$   $\triangle Zr3$   $\triangle Zr4$

$\triangle Zs$

# Fig.5a

RANGE OF
UNEVENNESS OF SURFACE

Z

WORKPIECE

X

# Fig.5b

HEIGHT

TIME

# Fig.6

TEACHING POSITION DATA IN PAST

PATH OF PROCESSING
TOOL (NEW TEACHING POINT)

HEIGHT

WORKPIECE